# EUROPEAN PATENT SPECIFICATION

(11) **EP 2 681 111 B1**
(45) Date of publication and mention of the grant of the patent: **06.07.2016**
(21) Application number: 11706239.8
(22) Date of filing: 01.03.2011
(51) Int. Cl.: B64C 1/14

(54) **A DRAINING DEVICE**
DRAINAGEVORRICHTUNG
DISPOSITIF D'ÉVACUATION

(43) Date of publication of application: 08.01.2014
(73) Proprietor: Short Brothers Plc, Belfast Antrim BT3 9DZ (GB)
(72) Inventor: RICHARDSON, John, Belfast BT5 6GU (GB)
(74) Representative: Gabriel, Franck
(86) International application number: PCT/EP2011/053043
(87) International publication number: WO 2012/116739

(56) References cited:
- US-A- 1 957 075
- US-A- 3 556 444
- US-A- 4 685 942
- US-B2- 7 121 512

## Description

### FIELD OF THE INVENTION

The present invention relates to a draining device.

Such a draining device would find a particular, though non exclusive, application, in association with an engine support strut, more particularly for installation on a pylon for supporting an engine of an aircraft used in the aerospace industry.

### BACKGROUND OF THE INVENTION

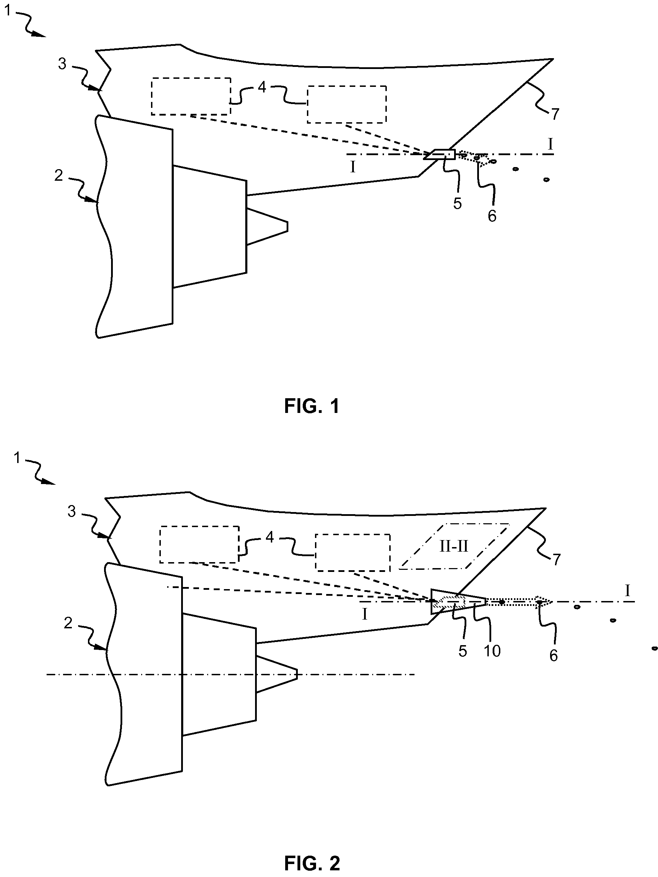

FIG. 1 is a side view partially illustrating an aircraft 1, in particular a rear part of an aircraft engine 2 and of a structure or pylon 3 for supporting said aircraft engine. Various components and lines may leak fluids into separate regions 4 of an engine support strut. For example, said components may be engine components and accessories, the gearbox, air-conditioning component, fuel lines, hydraulic lines, valves, the wing fuel tank, etc... The leaking fluids may be for example oil, lubricant, hydraulic fluid, fuel, etc... Further, water may condense within said regions. The build-up of any flammable fluid within the flight envelope of the aircraft represents a fire hazard. The build-up of water within the flight envelope of the aircraft could result in potential issues including ice damage and additional unnecessary weight. These fluids 6 are drained away from said components and discharged away from the aircraft by means of adequate drains 5. The pylon drain 5 having a substantially horizontal axis I-I may be arranged on a trailing edge 7 of the aircraft pylon 3.

When the aircraft is stationary, in particular without the engines operating, drainage can be achieved by suitable location of drain holes, orientation of drain tubes and the action of gravity. However, when the aircraft is flying on the ground with the engines operating, adverse pressure gradients located in a vicinity of the outlet of the drain may prevent the natural drainage from occurring. Such adverse pressure gradients may be generated by the action of the airflow over the structure of the aircraft. This is of particular importance in the case of drainage from the engine pylon or engine support structure.

The document US 7,121,512 describes a drain, for example for an aircraft engine support strut, arranged on the trailing edge of the rear secondary structure of the strut. The drain includes a conduit with a substantially horizontal axis and a substantially rectangular cross-section, taken in a plane parallel to the trailing edge, the conduit closed at an outer extremity by a terminal portion with a substantially ogival cross-section taken in the axis of the conduit and including at least one opening for drainage with an elongated shape on at least one of the opposing lateral walls. However, this is not satisfactory when an excessive adverse pressure gradient exists which might prevent effective drainage to occur.

The document US 3,556,444 describes an apparatus for controlling the discharge of leakage fluids from the jet engines of an aircraft. The apparatus includes a storage tank for receiving the leakage fluids from the engine. Adjacent the discharge orifice of the storage tank is a control valve actuated by a switch responsive to the flow of air about the fuselage. Means are included for pumping the leakage fluids from the tank in response to an open condition of the valve. The fluids removed from the tank are directed into the exhaust jet of the engines for combustion.

### SUMMARY OF THE INVENTION

It is an object of the invention to propose a draining device that overcomes the above mentioned drawback, and in particular enhance the drainage capacity when the aircraft is flying or taxiing on the ground.

It is proposed to induce a suction effect at the outlet of the drain tube. The suction effect is provided by a suction device.

According to one aspect, there is provided a draining device for draining a fluid from an aircraft engine support strut, the draining device comprising:
a suction arrangement comprising an inlet and extending along a longitudinal main axis to form a plenum chamber;
a drain tube for being fluidly connected to the aircraft engine support strut and extending along the longitudinal main axis, the drain tube ending by an outlet, the outlet of the drain tube terminating within the plenum chamber of the suction arrangement;
wherein the suction arrangement further comprises a converging-diverging part, the converging-diverging part forming a constricted section of tubing causing an air flow entering the inlet of the suction arrangement to be accelerated within the plenum chamber by a Venturi effect, said converging-diverging part being positioned relatively to the outlet such that said air flow entering the inlet of the suction arrangement causes a low-pressure region to be created within the plenum chamber, downstream of the outlet of the drain tube.

The suction arrangement may further comprise a swirling arrangement positioned upstream of the outlet of the drain tube causing the air flow entering the inlet of the suction arrangement to swirl within the plenum chamber.

The converging/diverging part forming the constricted section of tubing may be followed by a divergent diffusing portion downstream of the plenum chamber.

The drain tube outlet may protrude within the plenum chamber.

The drain tube outlet may be positioned proximate and upstream a throat of the constricted section of tubing.

The swirling arrangement may be formed by a shifted disposition of a longitudinal axis of an inlet duct of the suction arrangement relatively to the longitudinal main axis of the drain tube, the longitudinal inlet duct axis being tangentially oriented with respect to the drain tube.

The swirling arrangement may be formed by a plurality of inclined vanes circumferentially disposed and spaced externally around the drain tube, each vane being oriented according to a direction that is inclined with respect to the longitudinal main axis.

The plurality of inclined vanes may be supported by a portion of the drain tube proximate the drain tube outlet, or by a portion of a plenum chamber wall proximate the drain tube outlet.

The inlet of the suction arrangement may be positioned relatively to an aircraft engine such as to feed external fresh air into the plenum chamber.

The inlet of the suction arrangement may be positioned relatively to an aircraft engine such as to feed external air warmed by the aircraft engine into the plenum chamber.

The drain tube may be a single tube coupled to a plurality of conduit for discharging fluids from various regions of the engine support strut.

According to a further aspect, there is provided an engine support strut for supporting an aircraft engine comprising a draining device according to one aspect of the invention.

According to a still further aspect, there is provided an aircraft comprising an aircraft engine and an engine support strut for supporting the aircraft engine, wherein the engine support strut comprises a draining device according to one aspect of the invention.

According to a still further aspect, there is provided a method of draining a fluid from an aircraft engine support strut, the draining method comprising:
letting enter an air flow through an inlet into a plenum chamber;
fluidly connecting the aircraft engine support strut to a drain tube, the drain tube ending by an outlet, the outlet of the drain tube terminating within the plenum chamber;
wherein the method further comprises accelerating the air flow within the plenum chamber by a Venturi effect downstream of the outlet of the drain tube, and creating a low-pressure region within the plenum chamber, downstream the outlet of the drain tube.

The method may further comprise causing the air flow entering the inlet of the suction arrangement to swirl within the plenum chamber upstream of the outlet of the drain tube.

Thus, an aspect of the invention enables enhancing aspiration capacity by the drain tube of unwanted liquid generated in the engine or other components of the pylon. In particular, the invention represents a means by which the suction pressure at the outlet from the drain tube can be intensified to enhance the drainage capability at locations where there may otherwise be an adverse pressure gradient.

Further, the draining device can be considered as a "passive" suction device. The term "passive" means that the draining device does not comprise a powered element (e.g. a fan) to force a flow of air in the draining device or to extract a flow of air from the draining device in order to generate the suction effect. The initial flow of air penetrating into the draining device results from either the aircraft movement or the aircraft engine outflow.

Other advantages will become apparent from the following description of the invention.

### DESCRIPTION OF THE DRAWINGS

The present invention is illustrated by way of examples and not limited to the accompanying drawings, in which like references indicate similar elements:
- FIG. 1 is a side view illustrating a rear part of an aircraft engine and of an engine support strut fitted with a drain according to the prior art;
- FIG. 2 is a side view illustrating a rear part of an aircraft engine and of an engine support strut fitted with a draining device according to an aspect of the invention;
- FIGS. 3, 4A and 4B are a top cross-section view along the longitudinal plane of the engine support strut, a rear view and a cross-section view along plane V-V of FIG.3 illustrating the draining device according to an embodiment of the invention, respectively;
- FIGS. 5, 6A and 6B are a top cross-section view along the longitudinal plane of the engine support strut, a rear view and a cross-section view along plane V-V of FIG.5 illustrating the draining device according to another embodiment of the invention, respectively;
- FIGS. 7, 8A and 8B are a top cross-section view along the longitudinal plane of the engine support strut, a rear view and a partial cross-section view along plane VI-VI of FIG. 7 illustrating the draining device according to still another embodiment of the invention, respectively; and
- FIG. 9 illustrates an example of the contours of absolute pressure in the draining device of the invention.

### DETAILED DESCRIPTION OF EMBODIMENTS OF THE INVENTION

FIG. 2 is a side view partially illustrating an aircraft 1, in particular a rear part of an aircraft engine 2 and a rear part of an engine support strut 3 for supporting the aircraft engine. Fluids 6 may leak from various components and lines into various regions 4 of the engine support strut 3 (e.g. engine components and accessories, the gearbox, air-conditioning component, fuel lines, hydraulic lines, valves, the wing fuel tank, etc...). These fluids 6 are drained away and discharged away from the aircraft by means of the drain tube 5. The drain tube 5 is fluidly connected to the various regions 4 of the engine support strut 3. According to an aspect of the invention, a draining device 10 comprising the drain tube 5 is arranged on the trailing edge 7 of the engine support strut 3. However, the draining device may also be adapted to drain unwanted fluid from other regions of the aircraft not limited to the engine support strut, for example from the aircraft engine 2 by fluidly connecting the drain tube 5 to the aircraft engine 2. The leaking fluids may be for example oil, lubricant, hydraulic fluid, fuel, etc.... The draining device could also be used to drain any water ingress due to rain, water condensation, etc...from the above mentioned regions 4.

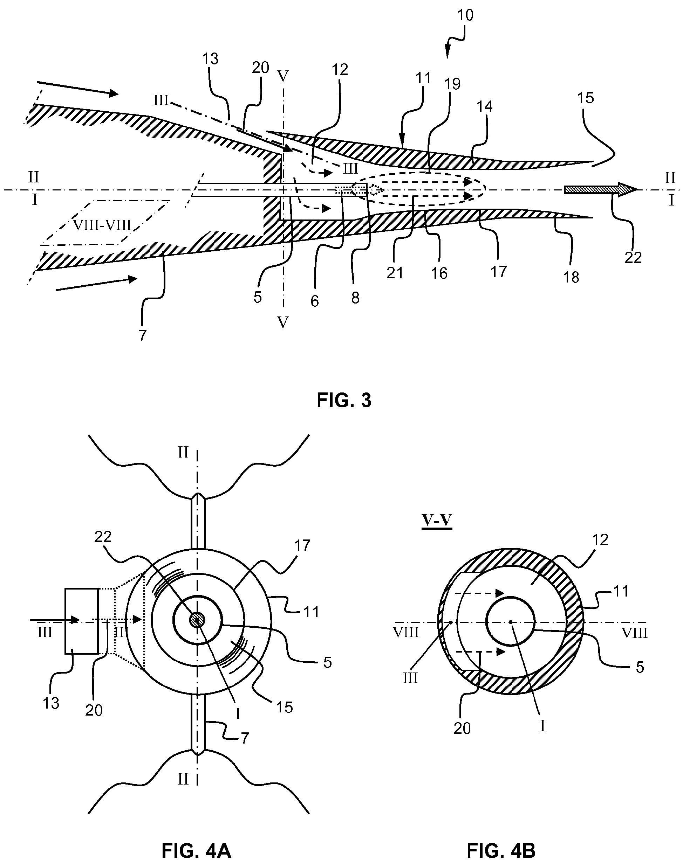

FIG. 3 is a top or bottom (depending on the position of the inlet on one side or the other side of the engine support strut, respectively) cross-section view along the longitudinal plane II-II of the engine support strut 3 (the plane parallel to the trailing edge) illustrating the draining device 10 according to an embodiment of the invention. FIG. 4A is a rear view illustrating the draining device according to the same embodiment. FIG 4B is a cross-section view along plane V-V of FIG. 3.

The draining device 10 comprises the drain tube 5 and a suction arrangement 11. The suction arrangement 11 comprises a plenum chamber 12, an inlet 13, a converging/diverging part 14 and an outlet 15. The plenum chamber 12 and the converging/diverging part 14 extends longitudinally along a longitudinal main axis I-I. The inlet 13 extends longitudinally along a longitudinal inlet axis III-III. The longitudinal inlet axis III-III and the longitudinal main axis I-I are extending substantially in a same transverse plane VIII-VIII (namely the plane perpendicular to the longitudinal plane II-II). The longitudinal inlet axis III-III is oriented so as to intersect the longitudinal main axis I-I. The inlet 13 is positioned in-line with the plenum chamber 12 so as to feed the plenum chamber with a flow of external air 20. The converging/diverging part 14 is a distal part of the device positioned downstream the plenum chamber 12. The converging/diverging part 14 is a constricted section of tubing, namely a tubing having a converging portion 16 positioned upstream of a throat 17 positioned upstream of a divergent diffusing portion 18.

Advantageously, the drain tube 5 also extends longitudinally along the main axis I-I and is arranged on the trailing edge 7 of the engine support strut 3 (to be better seen in FIG. 2). The drain tube outlet 8 terminates within the plenum chamber 12. The drain tube outlet 8 may be directly below the inlet 13 (not shown). Alternatively, the drain tube outlet 8 may protrude within the plenum chamber 12 (shown in the FIGS). In this embodiment, it is possible to position the drain tube outlet 8 proximate, though upstream, the throat 17 of the constricted section of tubing. The drain tube outlet 8 discharges the unwanted fluids 6 from the engine support strut into the plenum chamber 12. The drain tube 5 is a single tube that may be coupled to a plurality of conduit (illustrated by dotted lines in FIG. 2) for discharging fluids from various regions of or components of the engine support strut or aircraft engine.

The operation of the draining device 10 is as follows. When the aircraft is flying or even taxiing on the ground with the engines operating, a flow of air causes the flow of air 20 to be fed into the plenum chamber 12 through the inlet 13 of the suction arrangement 11.

Depending on the position of the inlet relatively to the aircraft engine, the flow of air 20 may be either a flow of external fresh air, or a flow of external air warmed by the aircraft engine (e.g. engine exhaust gas). Feeding external air warmed by the aircraft engine into the plenum chamber 12 may be advantageous to avoid icing issue within the draining device 10. Alternatively, the icing issue may be avoided by fitting the draining device with an appropriate heating arrangement (not shown).

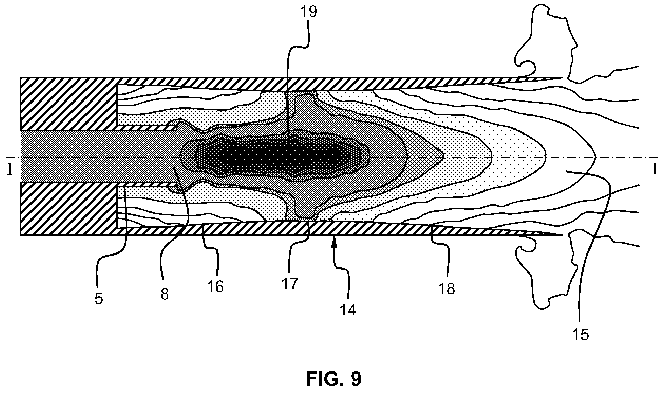

The constricted section of tubing of the converging/diverging part 14 generates an accelerated fluid flow 21 at the throat 17 due to the Venturi effect. A zone of reduced pressure 19 is created at the throat and extends towards the converging portion 16 and the divergent diffusing portion 18, as shown in FIG. 9. This further creates a suction effect that affects the drain tube outlet 8, and that is transmitted within the converging/diverging part of the drain tube 5. Thus, the draining of the unwanted fluids 6 from the drain tube 5 is enhanced.

FIG. 9 illustrates an example of the contours of absolute pressure and the gradient of pressure in the draining device in accordance with an embodiment of the invention. A dark colored zone indicates a pressure lower than a light colored zone. An enhanced suction effect is resulting from the lowest pressure zone 19. The position of the lowest pressure zone 19 can be predicted from the shape of the constricted section of tubing. The position of the drain tube outlet 8 relatively to the lowest pressure zone 19 enables an estimation of the suction effect within the drain tube 5.

With this suction effect, the draining device 10 allows an efficient drainage from the drain tube even in a situation where a potentially adverse pressure gradient occurs.

The flow of air 20 and the flow of the unwanted fluids 6 mix together downstream of the drain tube outlet 8. Any unwanted fluids flowing from the drain tube are carried by the flow of air and discharged from the outlet 15 of the draining device as a spray 22.

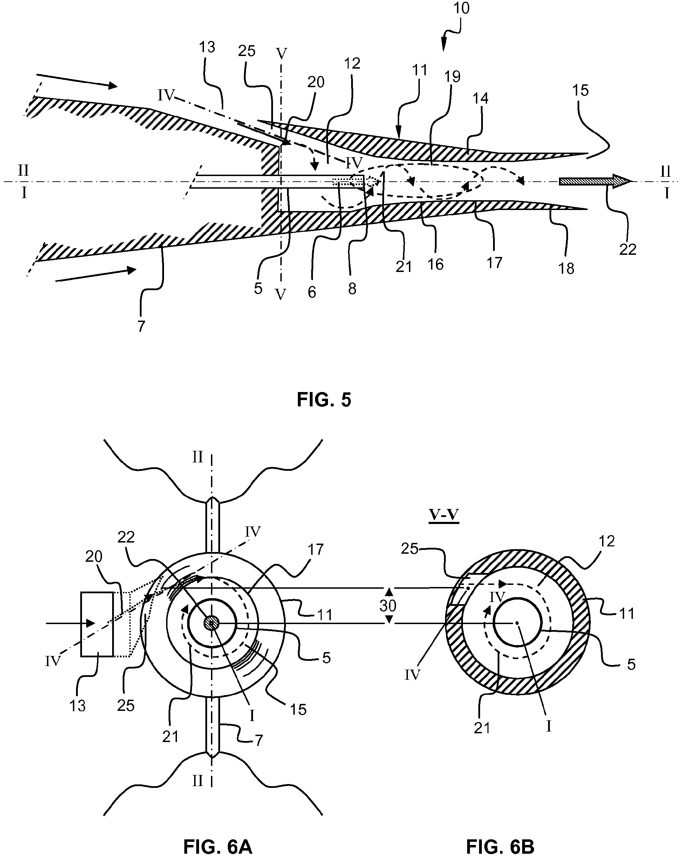

FIG. 5 is a top or bottom (depending on the position of the inlet on one side or the other side of the engine support strut, respectively) cross-section view along the longitudinal plane II-II of the engine support strut 7 illustrating the draining device 10 according to another embodiment of the invention. FIG. 6A is a rear view illustrating the draining device 10 according to the same embodiment. FIG. 6B is a cross-section view along plane V-V of FIG. 5.

This embodiment differs from the embodiment of FIGS. 3, 4A and 4B in that the suction arrangement 11 further comprises a swirling arrangement. The swirling arrangement is positioned upstream of the drain tube outlet 8. The swirling arrangement causes the fluid flow 21 into the plenum chamber through the inlet to swirl at least downstream of the drain tube outlet 8.

The inlet 13 of the suction arrangement 11 is coupled to the plenum chamber 12 through an inclined inlet duct 25. The inclined inlet duct 25 extends longitudinally along a longitudinal inclined inlet axis IV-IV.

The swirling arrangement is formed by a particular geometry of the inclined inlet duct 25 relatively to the plenum chamber 12 and the axis of the drain tube 5. In particular, the longitudinal inclined inlet axis IV-IV is not parallel with the longitudinal main axis I-I. The longitudinal inclined inlet axis IV-IV of the inlet duct 25 of the suction arrangement 11 is tangentially oriented with respect to the drain tube 5. Thus, the longitudinal inclined inlet axis IV-IV is shifted with respect to the longitudinal main axis I-I. The longitudinal inclined inlet axis IV-IV intersects the longitudinal plane V-V at a distance 30 from the longitudinal main axis I-I. The flow of air 20 penetrating into the plenum chamber 12 through the inlet 13 and the inclined inlet duct 25 of the suction arrangement 11 is induced to swirl by this particular geometry. The distance may be chosen.

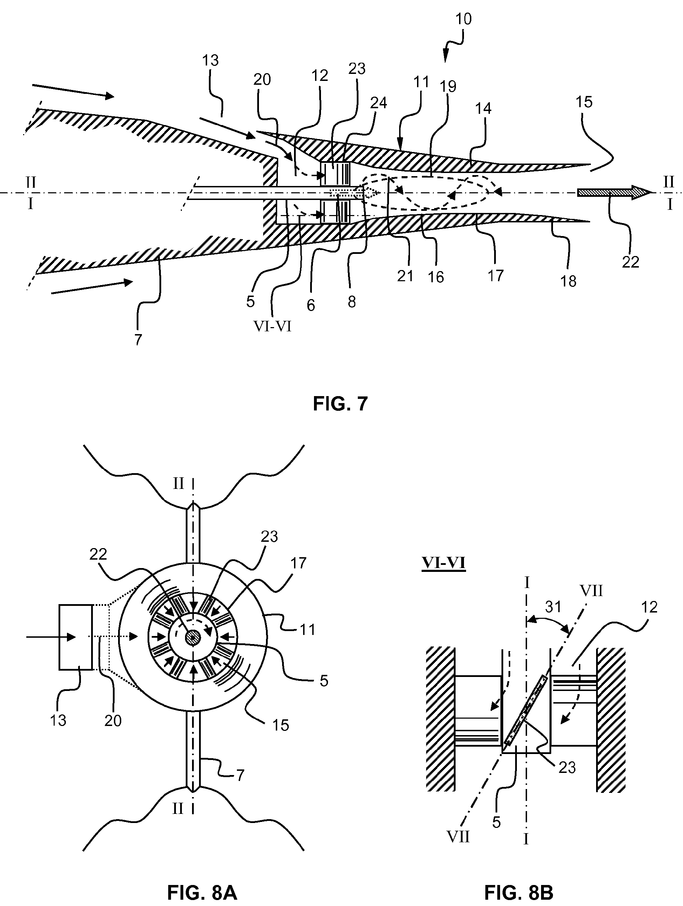

FIG. 7 is a top or bottom (depending on the position of the inlet on one side or the other side of the engine support strut, respectively) cross-section view along the longitudinal plane II of the engine support strut 7 illustrating the draining device 10 according to still another embodiment of the invention. FIG. 8A is a rear view illustrating the draining device 10 according to the same embodiment. FIG. 8B is a partial cross-section view along plane VI-VI of FIG. 7.

This embodiment also comprises a swirling arrangement but differs from the embodiment of FIGS. 5, 6A and 6B in that the swirling arrangement is formed by a plurality of inclined vanes 23 circumferentially disposed around a longitudinal axis I-I of the suction arrangement. Each vane is oriented according to a direction that is inclined with respect to the main longitudinal axis. As an example shown in FIG. 8B, each vane is oriented according to a direction VII-VII forming an inclination angle 31 with the main longitudinal axis I-I when projected in a same plane. The inclination angle 31 may be for example around 45°. Though FIG. 8B shows a vane having a linear/rectangular shape, it may also have a helical shape.

The plurality of inclined vanes 23 are positioned within the plenum chamber upstream of the drain tube outlet 8. As an example, the swirling arrangement may comprise eight vanes. Similar swirling effect can be obtained with less or more vanes.

As a first alternative (not shown), the inclined vanes 23 are supported only by a portion of the drain tube 5 proximate the drain tube outlet 8.

As a second alternative (not shown), the inclined vanes 23 are supported by a portion of a plenum chamber wall 24 proximate the drain tube outlet 8.

As a third alternative, the inclined vanes 23 are supported by both the plenum chamber wall 24 and the portion of the drain tube 5.

The flow of air 20 penetrating into the plenum chamber 12 through the inlet 13 of the suction arrangement 11 is channeled by the inclined vanes 23. The plurality of inclined vanes 23 induces the flow of air 21 to swirl downstream of the drain tube outlet 8.

In the embodiments of FIGS 5 to 8, the swirling flow of air 21 and the flow of the unwanted fluids 6 mix together downstream of the drain tube outlet 8 and are forced to accelerate through the throat 17 of the constricted section of tubing 14 due to the Venturi effect. Thereafter, the flow of air diffuses in the divergent diffusing section 18 downstream of the throat 17 and carries the unwanted fluid to the outlet 15 where it is discharged as a spray 22 (the spray consists of the flow of unwanted fluids mixed with the flow of air). The combined action of accelerating the flow through the throat and the swirling flow further enhances the suction effect that is transmitted to the drains tube 5.

In the hereinbefore described embodiments, the draining device can be dimensioned for any particular application by varying the intensity of swirl (angle of the inlet duct or inclination of the vanes), the throat area to outlet area ratio, the location of the drain tube, the inlet shape or type, the external air mass flow. The dimension of the plenum chamber needs to be large enough to accommodate the drain tube dimension. The dimension of the plenum chamber may further allow for small relative axial movements of the drain tube due to thermal expansion.

As an example, the diameter of the draining device is of the order of centimeter, for example the diameter may extend from one to five centimeters (approximately half an inch to two inches). The length of the draining device is of the order of ten centimeter, for example the diameter may extend from fifteen to twenty-five centimeters (approximately six to ten inches). Thus, the draining device has a compact and robust design and, thus, shows low vulnerability to damage when the aircraft is parked on the ground.

The drawings and their description hereinbefore illustrate rather than limit the invention. In this respect, the drawings are very diagrammatic.

In particular, though the drawings depict a draining device for an under wing engine powered aircraft, this does not limit the application of the invention to other kind of engine powered aircraft. Further, the draining device may be adapted on any type of drain mast, wing, etc.... The draining device may also be adapted for reducing the pressure within any region connected to the device via the drain tube.

Further, though the drawings show the inlet of the draining device being of the flush type, other type of inlet, for example a scoop type protruding inlet may be used. In particular, the scoop type protruding inlet may be more efficient to properly feed the plenum chamber in case the external boundary layer of air is thick.

Any reference sign in a claim should not be construed as limiting the claim. The word "comprising" does not exclude the presence of other elements than those listed in a claim. The word "a" or "an" preceding an element does not exclude the presence of a plurality of such element.

## Claims

1. A draining device for an aircraft engine support strut (3) for draining a fluid from said aircraft engine support strut (3), the draining device comprising:
a suction arrangement comprising an inlet (13) and extending along a longitudinal main axis (I-I) to form a plenum chamber (12);
a drain tube (5) for being fluidly connected to the aircraft engine support strut (3) and extending along the longitudinal main axis (I-I), the drain tube (5) ending by an outlet (8), the outlet (8) of the drain tube (5) terminating within the plenum chamber (12) of the suction arrangement; and
**characterized in that** the suction arrangement (11) further comprises a converging-diverging part, the converging-diverging part forming a constricted section of tubing (14) causing an air flow (20) entering the inlet (13) of the suction arrangement to be accelerated within the plenum chamber (12) by a Venturi effect, said converging-diverging part being positioned relatively to the outlet (8) such that said air flow (20) entering the inlet (13) of the suction arrangement causes a low-pressure region (19) to be created within the plenum chamber (12), downstream of the outlet (8) of the drain tube (5).

2. The draining device of claim 1, wherein the suction arrangement (11) further comprises a swirling arrangement positioned upstream of the outlet (8) of the drain tube (5) causing the air flow (20) entering the inlet (13) of the suction arrangement to swirl within the plenum chamber (12).

3. The draining device of claim 1, wherein the converging/diverging part forming the constricted section of tubing (14) is followed by a divergent diffusing portion (18) downstream of the plenum chamber (12).

4. The draining device according to anyone of the claims 1 to 3, wherein the drain tube outlet (8) protrudes within the plenum chamber (12).

5. The draining device according to anyone of the claims 1 to 4, wherein the drain tube outlet (8) is positioned proximate and upstream a throat (17) of the constricted section of tubing (14).

6. The draining device of claim 2, wherein the swirling arrangement is formed by a shifted disposition of a longitudinal axis (IV-IV) of an inlet duct (25) of the suction arrangement (11) relatively to the longitudinal main axis (I-I) of the drain tube (5), the longitudinal inlet duct axis (IV-IV) being tangentially oriented with respect to the drain tube (5).

7. The draining device of claim 2, wherein the swirling arrangement is formed by a plurality of inclined vanes (23) circumferentially disposed and spaced externally around the drain tube (5), each vane being oriented according to a direction (VII-VII) that is inclined with respect to the longitudinal main axis (I-I).

8. The draining device of claim 7, wherein the plurality of inclined vanes (23) are supported by a portion of the drain tube (5) proximate the drain tube outlet (8).

9. The draining device of claim 7, wherein the plurality of inclined vanes (23) are supported by a portion of a plenum chamber wall (24) proximate the drain tube outlet (8).

10. The draining device according to anyone of the claims 1 to 9, wherein the inlet (13) of the suction arrangement (11) is arranged to be positioned relatively to an aircraft engine (2) such as to feed external fresh air into the plenum chamber (12).

11. The draining device according to anyone of the claims 1 to 9, wherein the inlet (13) of the suction arrangement (11) is arranged to be positioned relatively to an aircraft engine (2) such as to feed external air warmed by the aircraft engine (2) into the plenum chamber (12).

12. The draining device according to anyone of the claims 1 to 11, wherein the drain tube (5) is a single tube coupled to a plurality of conduit for discharging fluids from various regions (4) of the engine support strut (3).

13. An engine support strut (3) for supporting an aircraft engine (2) comprising a draining device (10) according to anyone of the claims 1 to 12.

14. An aircraft (1) comprising an aircraft engine (2) and an engine support strut (3) for supporting the aircraft engine, wherein the engine support strut (3) comprises a draining device (10) according to anyone of the claims 1 to 12.

15. A method of draining a fluid from an aircraft engine support strut (3), the draining method comprising:
letting enter an air flow (20) through an inlet (13) into a plenum chamber (12);
fluidly connecting the aircraft engine support strut (3) to a drain tube (5), the drain tube (5) ending by an outlet (8), the outlet of the drain tube terminating within the plenum chamber (12); and
wherein the method further comprises accelerating the air flow (20) within the plenum chamber (12) by a Venturi effect downstream of the outlet (8) of the drain tube (5), and creating a low-pressure region (19) within the plenum chamber (12), downstream of the outlet (8) of the drain tube (5).

16. The draining method of claim 15, wherein the method further comprises causing the air flow (20) entering the inlet (13) of the suction arrangement to swirl within the plenum chamber (12) upstream of the outlet (8) of the drain tube (5).

## Patentansprüche

1. Drainagevorrichtung für eine Flugzeugtriebwerkträgeraufhängung (3) zum Abführen eines Fluids von einer Flugzeugtriebwerkträgeraufhängung (3), wobei die Drainagevorrichtung
über eine Ansaugvorrichtung, die einen Einlass (13) aufweist und sich entlang einer Hauptlängsachse (I-I) zum Ausbilden eines Aufnahmeraums (12) erstreckt,
über ein Abführrohr (5) verfügt, das mit der Flugzeugtriebwerkträgeraufhängung (3) fluidmechanisch verbunden ist und das sich entlang der Hauptlängsachse (I-I) erstreckt, wobei das Abführrohr (5) an einem Auslass (8) endet und wobei der Auslass (8) des Abführrohrs (5) innerhalb des Aufnahmeraums (12) der Ansauganordnung endet, und
**dadurch gekennzeichnet, dass** die Ansauganordnung (11) weiterhin über ein sich verengendes und dann sich erweiterndes Engführungsteil verfügt, wobei das Engführungsteil einen Verengungsabschnitt einer Leitungsanordnung (14) bildet, der dazu führt, dass ein in den Einlass (13) der Ansauganordnung eintretender Luftstrom (20) innerhalb des Aufnahmeraums (12) durch eine Venturi-Effekt beschleunigt wird, wobei das Engführungsteil in Bezug auf den Auslass (8) derart angeordnet ist, dass der in den Einlass (13) der Ansauganordnung eintretende Luftstrom (20) in Strömungsrichtung nach dem Auslass (8) des Abführrohrs (5) das Ausbilden eines Unterdruckbereichs (19) verursacht.

2. Drainagevorrichtung nach Anspruch 1, bei der die Ansauganordnung (11) weiterhin über eine Verwirbelungsanordnung verfügt, die in Strömungsrichtung vor dem Auslass (8) des Abführrohrs (5) angeordnet ist und ein Verwirbeln des in den Einlass (13) der Ansauganordnung eintretenden Luftstroms (20) innerhalb des Aufnahmeraums (12) verursacht.

3. Drainagevorrichtung nach Anspruch 1, bei der das den Verengungsabschnitt der Leitungsanordnung (14) bildende Engführungsteil in Strömungsrichtung nach dem Aufnahmeraum (12) von einem sich aufweitenden Verteilungsabschnitt (18) gefolgt ist.

4. Drainagevorrichtung nach einem der Ansprüche 1 bis 3, bei der sich der Abführrohrauslass (8) innerhalb des Aufnahmeraums (12) erstreckt.

5. Drainagevorrichtung nach einem der Ansprüche 1 bis 4, bei der der Abführrohrauslass (8) benachbart und in Strömungsrichtung vor einem Hals (17) des Verengungsabschnitts der Rohranordnung (14) angeordnet ist.

6. Drainagevorrichtung nach Anspruch 2, bei der die Verwirbelungsanordnung durch eine versetzte Anordnung einer Längsachse (IV-IV) eines Einlasskanals (25) der Ansauganordnung (11) in Bezug auf die Hauptlängsachse (I-I) des Abführrohrs (5) gebildet ist, wobei die Einlasskanallängsachse (IV-IV) in Bezug auf das Abführrohr (5) tangential ausgerichtet ist.

7. Drainagevorrichtung nach Anspruch 2, bei der die Verwirbelungsanordnung durch eine Anzahl von schräg ausgerichteten Flügeln (23) gebildet ist, die in Umfangsrichtung angeordnet und außen um das Abführrohr (5) beabstandet angeordnet sind, wobei jeder Flügel entsprechend einer Richtung (VII-VII) ausgerichtet ist, die in Bezug auf die Hauptlängsachse (I-I) winklig angestellt ist.

8. Drainagevorrichtung nach Anspruch 7, bei der die Anzahl von schräg ausgerichteten Flügeln (23) durch einen Abschnitt des Abführrohrs (5) benachbart des Abführrohrauslasses (8) getragen ist.

9. Drainagevorrichtung nach Anspruch 7, bei der die Anzahl von schräg ausgerichteten Flügeln (23) durch einen Abschnitt der Aufnahmeraumwand (24) benachbart des Abführrohrauslasses (8) getragen ist.

10. Drainagevorrichtung nach einem der Ansprüche 1 bis 9, bei der der Einlass (13) der Ansauganordnung (11) derart angeordnet ist, dass er in Bezug auf ein Flugzeugtriebwerk (2) derart positioniert ist, dass Frischluft von außen in den Aufnahmeraum (12) zuführbar ist.

11. Drainagevorrichtung nach einem der Ansprüche 1 bis 9, bei der der Einlass (13) der Ansauganordnung (11) derart angeordnet ist, dass er in Bezug auf ein Flugzeugtriebwerk (2) derart positioniert ist, dass durch das Flugzeugtriebwerk (2) erwärmte Luft von außen in den Aufnahmeraum (12) zuführbar ist.

12. Drainagevorrichtung nach einem der Ansprüche 1 bis 11, bei der das Abführrohr (5) ein einziges Rohr ist, das mit einer Anzahl von Leitungen zum Abführen von Fluiden aus verschiedenen Bereichen (4) der Triebwerkträgeraufhängung (3) verbunden ist.

13. Triebwerkträgeraufhängung (3) zum Tragen eines Flugzeugtriebwerks (2) mit einer Drainagevorrichtung (10) nach einem der Ansprüche 1 bis 12.

14. Luftfahrzeug (1) mit einem Flugzeugtriebwerk (2) und einer Triebwerkträgeraufhängung (3) zum Tragen des Flugzeugtriebwerks, wobei die Triebwerkträgeraufhängung (3) über eine Drainagevorrichtung (10) nach einem der Ansprüche 1 bis 12 verfügt.

15. Verfahren zum Abführen eines Fluids von einer Flugzeugtriebwerkträgeraufhängung (3), wobei des Abführverfahren
ein Zuführen eines Luftstroms (20) durch einen Einlass (13) in einen Aufnahmeraum (12),
ein fluidmechanisches Verbinden der Flugzeugtriebwerkträgeraufhängung (3) an ein Abführrohr (5) umfasst, wobei das Abführrohr (5) in einem Auslass (8) endet, wobei der Auslass des Abführrohrs in den Aufnahmeraum (12) mündet, und
wobei das Verfahren weiterhin ein Beschleunigen des Luftstroms (20) innerhalb des Aufnahmeraums (12) durch einen Venturi-Effekt in Strömungsrichtung nach dem Auslass (8) des Abführrohrs (5) und ein Erzeugen eines Unterdruckbereichs (19) innerhalb des Aufnahmeraums (12) in Strömungsrichtung nach dem Auslass (8) des Abführrohrs (5) umfasst.

16. Drainageverfahren nach Anspruch 15, wobei das Verfahren weiterhin ein erzwungenes Verwirbeln des in dem Einlass (13) der Ansauganordnung eintretenden Luftstroms (20) innerhalb des Aufnahmeraums (12) in Strömungsrichtung vor dem Auslass (8) des Abführrohrs (5) umfasst.

## Revendications

1. Dispositif de drainage pour une entretoise (3) de support de moteur d'aéronef permettant d'évacuer un fluide à partir de ladite entretoise (3) de support de moteur d'aéronef, le dispositif de drainage comprenant :
un arrangement d'aspiration comprenant une entrée (13) et s'étendant le long d'un axe principal longitudinal (1-1) pour former une chambre de surpression (12) ;
un tube de drainage (5) destiné à être relié fluidiquement à l'entretoise (3) de support de moteur d'aéronef et s'étendant le long de l'axe principal longitudinal (1-1), le tube de drainage (5) se terminant par une sortie (8), la sortie (8) du tube de drainage (5) débouchant à l'intérieur de la chambre de surpression (12) de l'arrangement d'aspiration ; et
**caractérisé en ce que** l'arrangement d'aspiration (11) comprend en outre une pièce convergente-divergente, la pièce convergente-divergente formant un tronçon rétréci de tubage (14) provoquant l'accélération d'un flux d'air (20) entrant dans l'entrée (13) de l'arrangement d'aspiration à l'intérieur de la chambre de surpression (12) par effet Venturi, ladite partie convergente-divergente étant positionnée par rapport à la sortie (8) de telle sorte que ledit flux d'air (20) entrant dans l'entrée (13) de l'arrangement d'aspiration provoque la création d'une région de basse pression (19) à l'intérieur de la chambre de surpression (12), en aval de la sortie (8) du tube de drainage (5).

2. Dispositif de drainage selon la revendication 1, dans lequel l'arrangement d'aspiration (11) comprend en outre un arrangement tourbillonnaire en amont de la sortie (8) du tube de drainage (5) provoquant à l'intérieur de la chambre de surpression (12) le tourbillonnement du flux d'air (20) entrant dans l'entrée (13) de l'arrangement d'aspiration.

3. Dispositif de drainage selon la revendication 1, dans lequel la partie convergente/divergente formant le tronçon rétréci de tubage (14) est prolongée par une section diffusante (18) en aval de la chambre de surpression (12).

4. Dispositif de drainage selon l'une quelconque des revendications 1 à 3, dans lequel la sortie (8) du tube de drainage fait saillie à l'intérieur de la chambre de surpression (12).

5. Dispositif de drainage selon l'une quelconque des revendications 1 à 4, dans lequel la sortie (8) du tube de drainage est positionnée à proximité et en aval d'un étranglement (17) du

6. Dispositif de drainage selon la revendication 2, dans lequel l'arrangement tourbillonnaire est formé par une disposition décalée d'un axe longitudinal (IV-IV) d'un conduit d'entrée (25) de l'arrangement d'aspiration (11) par rapport à l'axe principal longitudinal (1-1) du tube de drainage (5), l'axe longitudinal (IV-IV) du conduit d'entrée étant orienté tangentiellement par rapport au tube de drainage (5).

7. Dispositif de drainage selon la revendication 2, dans lequel l'arrangement tourbillonnaire est formé par une pluralité d'aubes (23) inclinées disposées circonférentiellement et espacées à l'extérieur autour du tube de drainage (5), chaque aube étant orientée selon une direction (VII-VII) inclinée par rapport à l'axe principal longitudinal (I-I).

8. Dispositif de drainage selon la revendication 7, dans lequel la pluralité des aubes (23) inclinées est supportée par une section du tube de drainage (5) à proximité de la sortie (8) du tube de drainage.

9. Dispositif de drainage selon la revendication 7, dans lequel la pluralité des aubes (23) inclinées est supportée par une section d'une paroi (24) de la chambre de surpression à proximité de la sortie (8) du tube de drainage.

10. Dispositif de drainage selon l'une quelconque des revendications 1 à 9, dans lequel l'entrée (13) de l'arrangement d'aspiration (11) est agencée de sorte à être positionnée par rapport à un moteur (2) d'aéronef afin d'envoyer de l'air frais extérieur dans la chambre de surpression (12).

11. Dispositif de drainage selon l'une quelconque des revendications 1 à 9, dans lequel l'entrée (13) de l'arrangement d'aspiration (11) est agencée de sorte à être positionnée par rapport à un moteur (2) d'aéronef afin d'envoyer de l'air frais extérieur réchauffé par le moteur (2) de l'aéronef dans la chambre de surpression (12).

12. Dispositif de drainage selon l'une quelconque des revendications 1 à 11, dans lequel le tube de drainage (5) est un tube unique relié à une pluralité de conduites permettant d'évacuer des fluides à partir de différentes régions (4) de l'entretoise (3) de support de moteur.

13. Entretoise (3) de support de moteur permettant de supporter un moteur (2) d'aéronef comprenant un dispositif de drainage (10) selon l'une quelconque des revendications 1 à 12.

14. Aéronef (1) comprenant un moteur (2) d'aéronef et une entretoise (3) de support de moteur permettant de supporter le moteur de l'aéronef, dans lequel l'entretoise (3) de support de moteur comprend un dispositif de drainage (10) selon l'une quelconque des revendications 1 à 12.

15. Procédé de drainage d'un fluide à partir d'une entretoise (3) de support de moteur d'aéronef, le procédé de drainage consistant à :
laisser entrer un flux d'air (20) à travers une entrée (13) dans une chambre de surpression (12) ;
relier fluidiquement l'entretoise (3) de support de moteur d'aéronef à un tube de drainage (5), le tube de drainage (5) se terminant par une sortie (8), la sortie du tube de drainage débouchant à l'intérieur de la chambre de surpression (12) ; et
dans lequel le procédé comprend en outre l'accélération du flux d'air (20) à l'intérieur de la chambre de surpression (12) par effet Venturi en aval de la sortie (8) du tube de drainage (5), et la création d'une région de basse pression (19) à l'intérieur de la chambre de surpression (12), en aval de la sortie (8) du tube de drainage (5).

16. Procédé de drainage selon la revendication 15, dans lequel le procédé comprend en outre le fait de provoquer à l'intérieur de la chambre de surpression (12) le tourbillonnement du flux d'air (20) entrant dans l'entrée (13) de l'arrangement d'aspiration en amont de la sortie (8) du tube de drainage (5).
